# EUROPEAN PATENT APPLICATION

(11) **EP 4 123 859 A1**
(43) Date of publication of application: **25.01.2023**
(21) Application number: 21772265.1
(22) Date of filing: 04.03.2021
(51) Int. Cl.: H02H 3/08

(54) **CURRENT OVERLOAD PROTECTION APPARATUS**

(30) Priority: 16.03.2020 CN 202010180114
(71) Applicant: Team Young Technology Co., Ltd., 32070 Taoyuan City (TW)
(72) Inventor: KUO, I-Tung, Taoyuan City, Taiwan 32070 (TW); HSIAO, Ching-Peng, Taoyuan City, Taiwan 32070 (TW); WANG, Cheng-Chung, Taoyuan City, Taiwan 32070 (TW)
(74) Representative: Becker, Eberhard
(86) International application number: PCT/CN2021/079002
(87) International publication number: WO 2021/185088

(57) **Abstract**

Provided by the present invention is a current overload protection apparatus. The apparatus comprises a current measuring device and a control module; the current measuring device is used to measure a current value on a current path; the control module is electrically connected to the current measuring device, and stores current threshold data; the current threshold data comprises a plurality of time intervals respectively corresponding to disconnection threshold values; the earlier the time corresponding to a plurality of time intervals, the larger the disconnection threshold value corresponding thereto; and the control module is used to receive and collect current signals within a specified time length so as to calculate the current value of the current path, and determine whether the current value is greater than or equal to the disconnection threshold values, and if so, then an overload protection step is performed to protect the load from current overload.

## Description

### TECHNICAL FIELD

The invention relates to a current overload protection apparatus, and in particular, to a current overload protection apparatus in which a current overload threshold decreases over time.

### RELATED ART

As is commonly seen in various electrical circuits, an electronic device receives a current exceeding a load thereof on the grounds of, for example, unstable power supply, element abnormality, load being adjusted to be excessively great, erroneous connection to a power supply, which may cause malfunction of or damage to the circuit or electronic device (hereinafter referred to as load). Therefore, an overcurrent protection mechanism, or referred to as overload protection mechanism, is ubiquitous in circuit designs.

It is currently known to utilize a circuit breaker for overcurrent protection from inrush currents coming from outside. A current overload threshold of the above-mentioned element is fixed. Once the passing current is greater than a preset overload threshold, the circuit breaker is de-energized or switched off, preventing damage to the load by the high current. However, if the load is a motor or a tungsten filament light bulb, there is a high current spike during normal startup. To prevent the circuit breaker from being erroneously disconnected by the high current at the startup and influencing the normal use, it is known that a common practice is to select a circuit breaker with a rated current several times that of the load for overcurrent protection. However, this is not an ideal design since a rated current higher than the load is allowed to pass through the load, and the current may still damage the load.

In the overcurrent and overload protection mechanism, a temperature detector, especially a negative temperature coefficient (NTC) temperature detector, is a commonly used detection element generally selected to be mounted on the circuit load to detect whether the load is overheating. Upon overheating, the circuit switch is controlled by feedback to automatically reduce or switch off the load current of the circuit. There are conventionally those issuing a warning, adjusting the current, or turning off the power when overheating exceeds a certain temperature; and also those determining whether the load is operating normally according to the temperature rising slope of the load and adjusting the load current.

However, since it requires time for the load to be heated by the current, it requires a comparatively long time to measure the overcurrent by utilizing the temperature, and the response is comparatively slow. In the meantime, the high current continuously increases the temperature of the lead wire. Before the protection starts and the circuit is disconnected, although the current flowing through the lead wire is not great enough to break the fuse, the current is already sufficient to deteriorate or burn the insulating cladding material on the surface of the lead wire, endangering the safety of users.

Similarly, there are also known physical fuse power-off switches that utilize the thermal energy when an overload current flows through to heat a circuit and utilize the current to thermally blow out. When encountering loads such as a tungsten filament light bulb or a motor, although there are no issues of erroneous shutdown due to a startup current caused powered off, since the power-off relies on the physical properties of temperature, the power-off time has a comparatively long response and is not sensitive. The issues above are also present.

In response to the issue of deterioration of the lead wire cladding material, it is known that a conventional system is proposed, including a fuse and an electronic current protector at the same time. In the system, a two-dimensional diagram of current versus time is designed, and threshold lines such as a normal current threshold line, a current threshold line of the fuse, and a current threshold curve of the lead wire package melting. In addition, the lines are utilized to divide the diagram of current versus time into multiple regions, so as to disconnect the circuit with the electronic current protector to protect the outer insulation layer of the lead wire before the lead wire cladding material deteriorates. However, the calculation requires repeatedly comparing a current value and a time value with multiple threshold lines, resulting in extremely high requirements for computational resources during the comparison, and a data processor with comparatively high computing capability is required to be adopted. Accordingly, the cost increases significantly, which is not conducive to product promotion.

On the other hand, to reduce the computing capability requirements of the processor, there has also appeared an electronic current overload protection apparatus, performing preprocess of the comparison process of disconnection threshold values with a hardware circuit outside the data processor, thereby reducing required computing capability of the processor. The system measures a current value with a current measuring device, and sends the current value to each of a first circuit, a second circuit, and a processor. The first circuit corresponds to a comparatively high current threshold in a startup state of the load. The second circuit corresponds to a comparatively low current threshold in a normal operating state of the load. Each of the first circuit and the second circuit are compared with the current value and output corresponding first signal and second signal to the processor. On the other hand, the processor determines whether the load is in the startup state or in the normal operation state according to the current value, and accordingly selects to receive one of the first signal or the second signal as the comparison result. Then, whether to disconnect the circuit to protect the load is determined according to the comparison result. Since the processor is responsible for only determining the working state and does not participate in the operation and comparison, the computing capability requirements for the processor can be minimized. However, in this design, each circuit for comparison only corresponds to the disconnection threshold value of one current. When there are a number of disconnection threshold values, the circuit design becomes extremely complicated, and the cost increases accordingly.

Accordingly, there has not been an overcurrent overload protection apparatus that has high safety, fast response, and low requirements for computing capability, and can support multiple current disconnection thresholds at the same time. The invention has emerged for solving this issue.

### SUMMARY OF THE INVENTION

In view of the issue that an overcurrent overload protection system that has high safety, fast response, and low requirements for computing capability, and can support multiple current disconnection thresholds has not been conventionally provided, in an embodiment of the invention, an overcurrent overload protection system is proposed, which utilizes an electronic current detector cooperating with a microprocessor and a disconnection module to perform current overload protection on a load.

To achieve the purpose of the invention, the invention provides a current overload protection apparatus, including a current measuring device and a control module. The current measuring device is used to perform a current measuring step S 1 to continuously detect a current value on a current path and output a corresponding current signal. The control module is electrically connected with the current measuring device. The control module stores current threshold data. The current threshold data includes a plurality of time intervals. The plurality of time intervals respectively correspond to disconnection threshold values. As times corresponding to the plurality of time intervals precede, the corresponding disconnection threshold values increase. The control module is used to perform a current detection step S2, an overload detection step S3, and an overload protection step S4. The current detection step S2 is used to receive and collect the current signal within a specified time length to obtain the current value. The overload detection step S3 is used to find the corresponding time interval from the current threshold data according to a time parameter of time counting, obtain the disconnection threshold value of the time interval, and determine by comparing the current value with the disconnection threshold value corresponding to the time interval corresponding to the time parameter. If the current value is greater than or equal to the disconnection threshold value, the overload protection step S4 is performed for a current overload protection operation on the load.

Further, the current overload protection operation is switching the current path from a connected state to a disconnected state. In addition, the current measuring device in an embodiment of the invention may be a Hall-effect current sensor. Moreover, in an embodiment of the invention, in the overload detection step S3, when the current value is determined to be less than the disconnection threshold value, the time parameter is continued to be accumulated, and the current measuring step S1, the current detection step S2, and the overload detection step S3 are sequentially performed again.

In the same embodiment, when entering the overload detection step S3, whether the current value is greater than or equal to a preset threshold value is first determined. If so, the overload detection step S3 is proceeded. If not, the time parameter is reset and the current measuring step S1, the current detection step S2, and the overload detection step S3 are sequentially performed again.

In the same embodiment, the preset threshold value is the same as the disconnection threshold value corresponding to the last time interval in the current threshold data. On the other hand, a time counting unit is used to start accumulating the time parameter after the current value of the current path reaches the preset threshold value. Furthermore, the disconnection threshold value corresponding to the first time interval in the current threshold data may selectively be infinity.

Moreover, in the same embodiment, the current overload protection apparatus may further include a correcting unit and a temperature measuring unit. The correcting unit is used to perform compensation correction on the disconnection threshold value stored in the current threshold data according to correction data to obtain a corrected disconnection threshold value. The temperature measuring unit is used to measure a temperature of the current measuring device or an ambient temperature and generate the correction data. The specified time length is not less than (1/F) seconds, where F is a frequency of an alternating current of the current path.

Moreover, in the same embodiment, the control module may be used to perform a disconnection restoration step S5 used to store an actuation control signal sent to the load. If the current path is disconnected because the current value is greater than or equal to the disconnection threshold value, the stored actuation control signal is caused to correspond to a disconnected state, and a working state of a disconnection module connected to the current path is caused to correspond to the stored actuation control signal.

Comprehensively speaking, considering the properties that the current is comparatively high at startup and comparatively low during normal operation of the load, compared with a single comparatively high disconnection threshold value adopted throughout conventionally, the overcurrent overload protection apparatus in an embodiment of the invention adopts multi-step current disconnection threshold values that gradually decreases over time and correspondingly changes based on the natural change in the current after the startup of the electrical device, and can protect the load more accurately.

In addition, compared with defining the relationship between the current disconnection threshold value and time with the complicated disconnection threshold value line, another focus of an embodiment of the invention is simplifying the continuous determination points of the disconnection threshold value line into a plurality of time intervals with second as an order of magnitude, and provide each time interval with a corresponding disconnection threshold value to simplify the obtaining and comparison of the disconnection threshold values. Thereby, the resources required for the operation are reduced, the cost of the processor is then reduced, and the accuracy of the protection operation is maintained. Moreover, compared with the conventional system that requires comparing multiple curved distribution lines of disconnection thresholds at the same time, the system in an embodiment of the invention first takes a single fixed value for basic filtering and reduces unnecessary comparisons. In the meantime, comparing the same with a single distribution line of disconnection threshold values can further simplify the comparison process and reduce the requirements for computing capability.

In addition, to make the above and other purposes, features, and advantages of the invention more comprehensible, preferred embodiments accompanied with drawings are described in detail as follows. However, those ordinarily skilled in the related art should understand that the detailed description and specific embodiments provided for implementing the invention only serve for describing the invention, instead of limiting the claim scope of the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a functional block diagram showing an embodiment of a current overload protection apparatus of the invention.
FIG. 2A is a schematic diagram showing current threshold data of an embodiment of the current overload protection apparatus of the invention.
FIG. 2B is a schematic diagram showing current disconnection threshold value versus cumulative time corresponding to current threshold data in an embodiment of the current overload protection apparatus of the invention.
FIG. 3 is a schematic diagram showing current disconnection threshold value versus cumulative time corresponding to current threshold data in a modified embodiment of the current overload protection apparatus of the invention.
FIG. 4A is a flowchart showing steps of an embodiment of actuation of the control module of the current overload protection apparatus of the invention.
FIG. 4B is a flowchart showing steps in a disconnection restoration step in an embodiment of actuation of the control module of the current overload protection apparatus of the invention.

### DESCRIPTION OF THE EMBODIMENTS

Hereinafter, the constituent members, steps, and achieved effects of a current overload protection apparatus of the invention will be described in corresponding preferred embodiments with the accompanying drawings. Nonetheless, the members, size, and appearance of the current overload protection apparatus in the accompanying drawings are only used for illustrating the technical features of the invention, instead of limiting the invention.

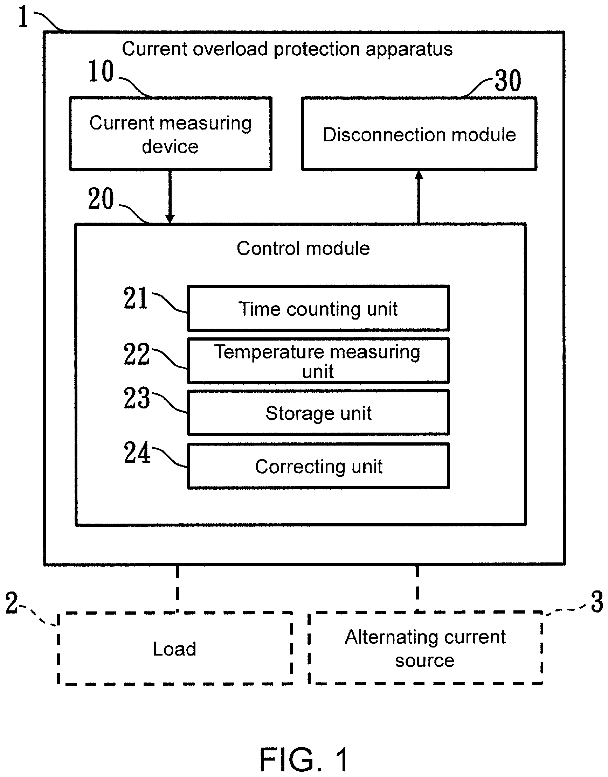

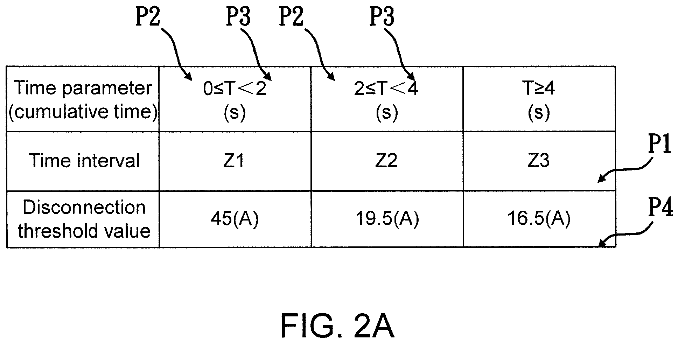

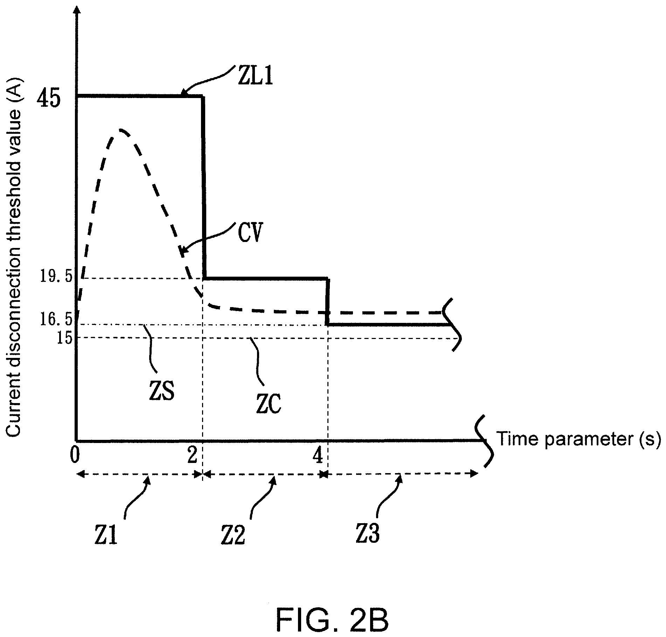

With reference to FIG. 1, FIG. 2A, and FIG. 2B, FIG. 1 is a functional block diagram showing a current overload protection apparatus 1 of an embodiment of the invention, FIG. 2A is a schematic diagram showing current threshold data of an embodiment of the current overload protection apparatus of the invention, and FIG. 2B is a schematic diagram showing current disconnection threshold value versus cumulative time corresponding to current threshold data in an embodiment of the current overload protection apparatus of the invention.

Firstly, the current overload protection apparatus 1 of the invention may be electrically connected with a load 2, or integrated in the load 2, for current overload protection thereon to prevent an electrical energy more than allowable for the electronic device from passing through the electronic device, and damaging the electronic device. The load 2 may be an extension cord, a socket, or an electrical product and an electronic device connected thereto. In an embodiment of the invention, the current overload protection apparatus 1 is connected to a current path between the load 2 and an alternating current source 3.

In an embodiment, the current overload protection apparatus 1 of the invention includes a current measuring device 10, a control module 20, and a disconnection module 30. The current measuring device 10 is used to detect a current value on the current path. The control module 20 is used to determine whether the current path is overloaded according to the current value, and may control connected and disconnected states of the current path through the disconnection module 30.

In this embodiment, the current measuring device 10 is a Hall-effect current sensor, and may measure an alternating current on the circuit and output a direct-current voltage signal corresponding to the magnitude of the current for subsequent applications by the control module 20. Nonetheless, the current measuring device 10 may also be a shunt resistor current sensor, and the invention is not limited thereto.

The control module 20 is, for example, a micro control unit (abbreviated as MCU), and includes a time counting unit 21, a temperature measuring unit 22, a storage unit 23, and a correcting unit 24. The time counting unit 21 is used to count and accumulate the time. The temperature measuring unit 22 is used to measure the temperature. The storage unit 23 is used to store data. The correcting unit 24 is used to correct a disconnection threshold value error due to temperature. The above-mentioned units may each be present in the form of hardware, firmware, or software.

The disconnection module 30 refers to a known circuit element that may switch between connection and disconnection, and may be an electrically controlled circuit switch or relay. Next, with reference to FIG. 1, in this embodiment, the disconnection module 30 is a relay.

In this embodiment, the storage unit 23 is the flash that may be repeatedly overwritten, and stores current threshold data and various executable data. Nonetheless, the various executable data is present in the form of not only programing codes or firmware encoding but also hardware (e.g., a circuit and so on).

Actuation of the current overload protection apparatus 1 will be described below. In this embodiment, the current overload protection apparatus 1 is electrically connected with the current path between the alternating current source 3 and the load 2.

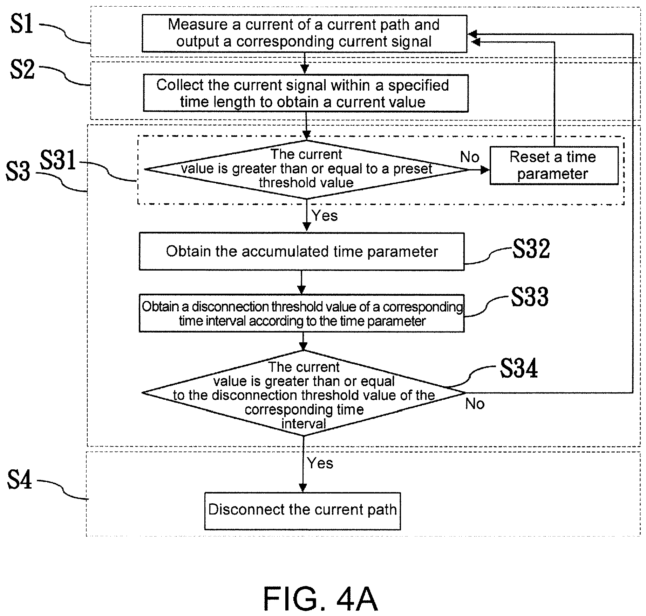

With reference to FIG. 4A, FIG. 4A is a flowchart showing steps of an embodiment of actuation of the control module 20 of the current overload protection apparatus 1 of the invention. During application, after a current path is powered on, a current measuring step S 1 is firstly performed to measure a current of the current path with the current measuring device 10 and continuously output a corresponding current signal in real time. Moreover, when the current path is powered on, the current signal sent to the control module 20 by the current measuring device 10 corresponds to a non-zero current value. In the meantime, the control module 20 starts to perform a current detection step S2.

During the current detection step S2, the control module 20 receives and collects the current signal within a specified time length from the current measuring device 10 to calculate the current value of the current path. In this embodiment, the current on the current path is in the form of alternating current. To obtain the current value accurately, it is required to collect a value of the current path within a specified time. In this embodiment, the specified time is equivalent to at least one wavelength of the alternating current. That is, the specified time length is longer than each frequency period of the alternating current. That is, the specified time length is not less than (1/F) seconds, where F is a frequency of the alternating current of the current path.

In this embodiment, flowing through the current path is utility power present in the form of alternating current with a voltage of 110V and a frequency of 60 Hz. Nonetheless, the voltage and the frequency thereof are not limited thereto. The specified time may also be greater than or equal to a quarter of the frequency period of the alternating current on the current path depending on the accuracy requirements. That is, assuming that the frequency of the alternating current of the current path is 60 Hz, then the specified time is greater than or equal to 4.17 milliseconds (ms). The accuracy of the current may be improved by increasing the specified time. For example, assuming F is the frequency of the alternating current of the current path, then when the specified time length is greater than or equal to 1/(2*F) seconds, 1/F, and 21P, the accuracy is respectively good, better, and even better. In this embodiment, flowing through the current path is utility power present in the form of alternating current with a voltage of 110V and a frequency of 60 Hz. Nonetheless, the voltage and the frequency thereof are not limited thereto.

In this embodiment, in the current detection step S2, an accurate current value of the alternating current obtained from measurement is estimated by the root mean square algorithm. The term root mean square value algorithm refers to summation of the squares of all values of a parameter corresponding to the current, obtaining the mean thereof, and then extracting the square root to obtain the root mean square value. Accordingly, a comparatively accurate current value is obtained. Nonetheless, the invention is not limited to the root mean square algorithm. The current value may also be calculated by converting the current value from the peak voltage or taking the mean of values within a shorter period of time. Nonetheless, for the current value converted from the peak voltage in the case of a comparatively low electrical power factor, erroneous determination of unexpected disconnection within the allowable power range of the circuit is likely in the case that the current peak value is high while the actual power is low. Therefore, the root mean square algorithm has better effects.

As shown in FIG. 4A, the control module 20 performs an overload detection step S3 after obtaining the current value in the current detection step S2. The overload detection step S3 includes a startup determining sub-step S31, a time counting sub-step S32, a threshold obtaining sub-step S33, and an overload determining sub-step S34.

The startup determining sub-step S31 is used to determine whether the current value is greater than or equal to a preset threshold value ZS when entering the overload detection step S3. If so, the subsequent sub-steps in the overload detection step S3 are proceeded. If not, a time parameter is reset and the current measuring step S1, the current detection step S2, and the overload detection step S3 are sequentially performed again. One of the manners of above-mentioned resetting refers to setting the time parameter to zero.

In this embodiment, the preset threshold value ZS and a disconnection threshold value corresponding to a last time interval corresponding to the current threshold data are the same, and are 16.5 amperes, but not limited to being the same.

That is, at the beginning of the startup determination step S3, after receiving the current signal sent by the current measuring device 10, the control module 20 first determines whether the current value is greater than or equal to a single fixed value of the preset threshold value. If not, startup of current overload protection is determined to be not required on the grounds of a comparatively low current value. Therefore, after the time parameter is reset, a new cycle is be performed, and the current measuring step S1, the current detection step S2, and the overload detection step S3 are sequentially performed again. If so, the subsequent relevant sub-steps of current overload protection are proceeded.

After the overload detection step S3 passes through the startup determining sub-step S31, the time counting sub-step S32 is performed to utilize the time counting unit 21 to count the time and accumulate the value on the original time parameter to serve as a new time parameter. The time counting starts from determining the current value to be greater than or equal to the preset threshold value ZS in the startup determining sub-step S31, and is accumulated over time to be the time parameter.

Afterward, the threshold obtaining sub-step S33 is performed. In this sub-step, the control module 20 finds a corresponding time interval from the above-mentioned current threshold data according to the time parameter continuously updated by the time counting unit 21, and obtains a disconnection threshold value of the corresponding time interval.

For example, a plurality of time intervals are recorded in the current threshold data. Each time interval corresponds to a disconnection threshold value of the upper limit of current. With reference to FIG. 2A and FIG. 2B together, which disclose respectively a schematic diagram of current threshold data and a schematic diagram of current disconnection threshold value versus cumulative time. As can be seen from the figures, the current threshold data includes a name P1 of each time interval, a start time value P2 and an end time value P3 of each time interval, and a disconnection threshold value P4 corresponding to each time interval. FIG. 2A is presented as a table for ease of understanding. Nonetheless, the content and format of the current threshold data are not limited to what are shown in the figure during the actual application.

Next, with reference to FIG. 2B, the current threshold data is presented by visualization. The horizontal axis in the figure represents the time parameter, and the unit is second. The time counting unit 21 starts counting the time after the operation starts, and accumulate the time from zero over time to be the time parameter. The vertical axis represents the corresponding current disconnection threshold value, and the unit is ampere (A). The figure shows a distribution line ZL1 of disconnection threshold values. As can be known from the shape of the distribution line ZL1 of disconnection threshold values, a first time interval Z1, a second time interval Z2, and a third time interval Z3 are sequentially and consecutively arranged in a temporal sequence of occurrences from early to late.

In this embodiment, the disconnection threshold value corresponding to each time interval gradually decreases as time increases, and the disconnection threshold value of the last time interval and the preset threshold value ZS are the same, but not limited to being the same during application.

In this embodiment, the first time interval Z1 is the first time interval in the current threshold data, and the corresponding time parameter starts from the 0th second and ends before the 2nd second. Compared with a normal working current ZC of 15A of the load 2, the first disconnection threshold value of the first time interval Z1 is set to 3 times the normal working current ZC, i.e., 45A, in response to the high current at the startup of the load 2. The wording "before the Nth second" does not include the Nth second per se.

In addition, the first disconnection threshold value should be greater than the normal working current ZC of the load 2, and may be selectively less than or equal to 2 times, 3 times, 5 times, and 10 times the normal working current ZC. In another embodiment, the first disconnection threshold value may be infinity. That is, comparison between the current value and the first disconnection threshold value may be omitted during the first time interval Z1, and an overload protection step S4 is not performed during the first time interval Z1. That is, regardless of the current value on the current path, when the disconnection threshold value is infinity, the current path is not disconnected for being determined to be overloaded during the first time interval Z1.

The cumulative time corresponding to the second time interval Z2 starts from the 2nd second and ends before the 4th second. Since the current flowing through the current path decreases rapidly after the startup of the load 2, the second disconnection threshold value is set to be slightly greater than or equal to 1.3 times the normal current, i.e., 19.5A. The second disconnection threshold value should be greater than the normal working current ZC of the load 2, and may be its 1.8 times or more, 1.5 times or more, or 1.3 times or any other value less than the disconnection threshold value of the previous time interval.

In this embodiment, the cumulative time corresponding to the third time interval Z3 starts from the 4th second, and the corresponding third disconnection threshold value and the preset threshold value are the same, but not limited to being the same during application. In this embodiment, the third disconnection threshold value may be slightly greater than the normal working current ZC, and is 1.1 times the normal working current ZC, i.e., about 16.5A. The third disconnection threshold value may be between 1.6 times or more, 1.2 times or more, 1.15 times or more the normal working current ZC, and less than the disconnection threshold value corresponding to the previous time interval. In this embodiment, the third time interval Z3 has no time length limitation on the grounds that the setting of the third time interval Z3 is only intended to determine whether the current value is greater than or equal to the disconnection threshold value. If the current value is greater than or equal to the disconnection threshold value, a current overload protection operation is performed on the load and the current path is disconnected. If the current value is less than the disconnection threshold value, the comparison ends without the requirements of an excessively long time.

As can be seen from the figure, the current threshold data of this embodiment includes only three time intervals. Nonetheless, one or more new time intervals may be inserted between each of the time intervals depending on the requirements. Nonetheless, the rule that as the time corresponding to the time parameter precede, the corresponding disconnection threshold value increases should still be maintained for the added time interval. When the number of time intervals included in each distribution line ZL1 of disconnection threshold value is, for example, greater than or equal to 3, and less than or equal to respectively 20, 10, 7, and 5, the benefits are good, better, comparatively better, and even better.

Nonetheless, it should be noted that by extending the time occupied by the time intervals, the current threshold data is simpler and requires less comparison resources, but the accuracy of overload protection is relatively reduced. Depending on the requirements, the time intervals may be set to, for example, as being greater than or equal to 0.01 second, 0.1 second, or 0.5 second that is not 0 second, and less than or equal to 0.5 second, 1 second, 2 seconds, 3 seconds, 5 seconds, or 10 seconds. When the respective cumulative time length corresponding to each time interval is between 0.5 to 10 seconds, 1 to 5, and 2 to 3 seconds, the protection precision is good, better, and even better.

In this embodiment, when the total time occupied by the time intervals before entering the last time interval is 20 seconds or less, 10 seconds or less, and 5 seconds or less, the response performance is good, better, and even better..

On the other hand, in addition to utilizing a single time counting unit 21 to distinguish time intervals by accumulating time, it is also possible to independently utilize the time counting units 21 to count the time during each time interval. Moreover, the sequence and cumulative times of the time counting units 21 are set in advance. For example, it is possible to set the following in advance. When the second being counted by the first time counting unit 21 is non-zero and before it reaches a specified value (e.g., 2 seconds), the first disconnection threshold value is taken as the comparison standard. When the second being counted by the first time counting unit 21 reaches a specified value (e.g., 2 seconds), another time counting unit 21 is started up to count the time, and the second disconnection threshold value is taken as the comparison standard until the processor reaches a specified value. At this time, the time counting unit is stopped, and the next preset time counting unit 21 is started up and the disconnection threshold value of the next time interval is taken as the comparison standard, and so on.

Further to the above, after the control module 20 finds the corresponding time interval from the current threshold data according to the time parameter, the disconnection threshold value corresponding to the time interval can be obtained accordingly. Next, the overload determining sub-step S34 is performed for the control module 20 to perform comparison and determination according to the current value obtained in the current detection step S2 and the disconnection threshold value obtained in the threshold obtaining sub-step S33. When the current value is less than the disconnection threshold value, the time parameter continues to be accumulated, and the current measuring step S1, the current detection step S2, and the overload detection step S3 are sequentially performed again. If the current value is greater than or equal to the disconnection threshold value, the overload protection step S4 is performed.

The overload protection step S4 is used to perform a current overload protection operation on the load 2 when the current value is determined to be greater than or equal to the disconnection threshold value corresponding to the time interval of the corresponding time parameter. The overload protection step S4 includes causing the control module 20 to send an overload signal to the disconnection module 30 connected to the current path, and causing the disconnection module 30 to switch the current path from a connected state to a disconnected state.

In an embodiment, it is assumed that the load 2 is a water dispenser. After being connected to the power, the water dispenser receives a startup signal, and a heater therein operates at full power. The current measuring device 10 of the current overload protection apparatus 1 performs the current measuring step S1 to measure a current on a current path and output a corresponding current signal. Upon receiving the current signal, the control module 20 performs the current detection step S2 to receive and collect the current signal within a specified time length to obtain a comparatively accurate current value. A measured current value CV is as schematically shown in FIG. 2B.

Afterward, the overload detection step S3 is entered, and the measured current value being 17A is taken as an example. When performing the startup determining sub-step S31, the control module 20 determines that the current value is greater than or equal to the preset threshold value of 16.5A, and accordingly performs the time counting sub-step S32.

Next, in the time counting sub-step S32, the time is counted and the time parameter is accumulated. In the meantime, the accumulated time parameter being slightly greater than 0 second may be obtained. The time parameter is obtained from counting and accumulating by the time counting unit 21 in the control module 20 starting from the time that the current value is greater than or equal to the preset threshold value of 16.5A.

Accordingly, the control module 20 performs the threshold obtaining sub-step S33 to obtain a disconnection threshold value of a time interval corresponding to the time parameter in the current threshold data according to the time parameter being slightly greater than 0 second. In this embodiment, when the time parameter is slightly greater than 0 second, the first time interval Z1 is matched from the current threshold data and the first disconnection threshold value of 45A is obtained in the threshold obtaining sub-step S33.

Afterward, the control module 20 performs the overload determining sub-step S34 and determines whether the current value is greater than or equal to the disconnection threshold value of 45A. If the current value measured in the current detection step S2 is greater than or equal to 45A, after determining that the measured current value is greater than or equal to the disconnection threshold value, the control module 20 performs the overload protection step S4 to cause the control module 20 to send an overload signal to the disconnection module 30 connected to the current path, and cause the disconnection module 30 to switch the current path from a connected state to a disconnected state.

If the time parameter is located in the first time interval Z1, and the current value measured in the current detection step S2 is less than 45A, the overload protection step S4 is not performed. In the opposite case, the time parameter is continued to be accumulated and the current measuring step S1, the current detection step S2, and the overload detection step S3 are sequentially performed again.

In the same embodiment, as the above-mentioned cycle is continuously performed, the time parameter is continuously incremented without being reset. It is assumed that the current obtained in the current detection step S2 is 17A when the time parameter is increased to the 3rd second. Then, since the current value is greater than the preset threshold value ZS, through the startup determining sub-step S31 and the time counting sub-step S32 to the threshold obtaining sub-step S33, it is found that the corresponding time interval is the second time interval Z2 and the disconnection threshold value is 19.5A by looking up the current threshold data according to the time parameter of the 3rd second. As mentioned above, since the current value of 17A is not greater than the disconnection threshold value of 19.5A, the overload protection step S4 is not performed. Afterward, the control module 20 continues to accumulate the time parameter and sequentially performs the current measuring step S1, the current detection step S2, and the overload detection step S3 again.

Afterward, if the time parameter is increased to the 4th second and the current obtained by the current detection step S2 is still 17A, since the current is maintained to be greater than the preset threshold value ZS above, through the startup determining sub-step S31 and the time counting sub-step S32 to the threshold obtaining sub-step S33, it is found that the corresponding time interval is the third time interval Z3 and the disconnection threshold value is 16.5A by looking up the current threshold data according to the time parameter of the 4th second. Since the current value of 17A is greater than the disconnection threshold value of 16.5A, the overload protection step S4 is performed. The control module 20 sends an overload signal to the disconnection module 30 connected to the current path, and causes the disconnection module 30 to switch the current path from a connected state to a disconnected state, for the sake of current overload protection.

As can be known from the process flows of the embodiment mentioned above, further look-up and comparison of the disconnection threshold value are started up only when the measured current is greater than or equal to the preset value of the preset threshold value, thereby improving efficiency and effectively reducing waste of computing capability.

On the other hand, in this embodiment, a Hall current measuring device is adopted for the current measuring device 10. Different results are obtained from measurement of the same current by the Hall current measuring device at different temperatures. To improve the accuracy of current measurement, correction data is pre-stored in the storage unit of this embodiment. The correction data is obtained by recording the difference generated by the current measuring device 10 of the same model at different temperatures in advance. The correcting unit 24 may perform compensation correction on the disconnection threshold value stored in the current threshold data according to the correction data to obtain a corrected disconnection threshold value.

For example, the correction value may refer to a temperature correction value or a current threshold correction value. That is, the correcting unit 24 may obtain a corresponding temperature, compensation value from the correction data according to a temperature value obtained from measurement. In addition, after compensating for the temperature value with the temperature compensation value, the correcting unit 24 may obtain the disconnection threshold value corresponding to the temperature and the time interval from the current threshold data according to the compensated temperature value. Alternatively, the correcting unit 24 may also obtain a corresponding disconnection threshold correction value from the current threshold data according to a temperature value obtained from measurement. In the meantime, the correcting unit 24 compensates for the disconnection threshold value of a specified time interval with the disconnection threshold correction value, thereby reducing the influence of temperature on the measurement accuracy. Nonetheless, the invention is not limited to the previous embodiment. All correction to the disconnection threshold value based on a pre-recorded temperature correction data fall with the scope of the invention.

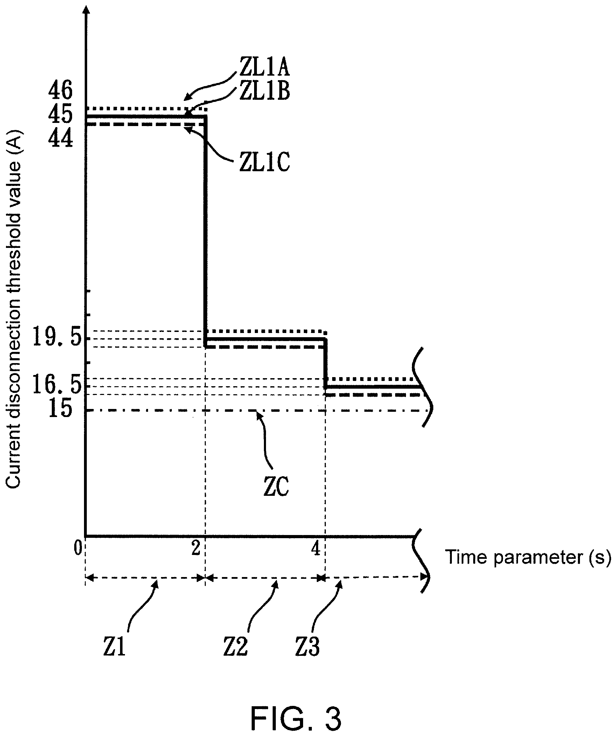

FIG. 3 is a schematic diagram showing compensated disconnection threshold values. As can be seen from the figure, a plurality of compensated correction threshold values in the current threshold data are presented by a plurality of distribution lines ZL1A to ZL1C of disconnection threshold values corresponding to different temperatures or temperature intervals in the figure. Moreover, the number of distribution lines in the figure is 3. Nonetheless, corresponding distribution lines may be respectively set for the temperature intervals during application, and the invention is not limited thereto. Correspondingly, the threshold obtaining sub-step S33 may be further used to perform compensation correction on the disconnection threshold value stored in the current threshold data according to the correction data to obtain the corrected disconnection threshold value.

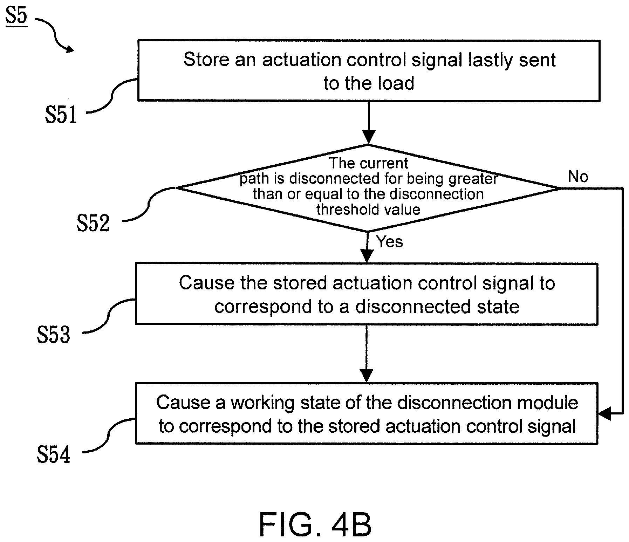

In addition, in this embodiment, the control module 20 may perform a disconnection restoration step S5 synchronously and independently while performing the steps above. Please refer to FIG. 4B. FIG. 4B is a flowchart showing steps in a disconnection restoration step in an embodiment of actuation of the control module 20 of the current overload protection apparatus 1 of the invention. As can be seen from the figure, the disconnection restoration step S5 sequentially includes a state storage sub-step S51, a disconnection determining sub-step S52, a signal adjusting sub-step S53, and a disconnection control sub-step S54.

In the state storage sub-step S51, an actuation control signal lastly sent to the load 2 may be received and stored. In an embodiment, when the load 2 is an electronic product controlled by a controller (e.g., a wireless remote control), the control module 20 records and stores the latest actuation control signal received by the electronic product from the controller. In this embodiment, the actuation control signal may correspond to a switch command of the disconnection module 30.

If the current path is disconnected due to abnormality, the control module 20 performs the disconnection determining sub-step S52. In the disconnection determining sub-step S52, whether the current path is disconnected for being greater than or equal to the disconnection threshold value may be determined. If so, the signal adjusting sub-step S53 is performed to cause the stored actuation control signal to correspond to a disconnected state by maintaining, adjusting, or the like, and the disconnection control sub-step S54 is performed accordingly. In the opposite case, if the disconnection is not due to being greater than or equal to the disconnection threshold value, but the current path is instead disconnected since the disconnection module 30 is disconnected for a power failure or other reasons, the stored actuation control signal is not changed, and the disconnection control sub-step S54 is directly performed when abnormality is terminated and the power is restored. The disconnection control sub-step S54 refers to utilizing the control module 20 to maintain, adjust, or the like, to cause a working state of the disconnection module 30 to correspond to the stored actuation control signal.

Briefly speaking, when the circuit is disconnected for a power failure, if the actuation control signal received by the load 2 before the power failure corresponds to a startup signal, the current overload protection apparatus 1 of this embodiment may restore the working state of the disconnection module 30 to a connected state at the time of startup after the power is restored. If the actuation control signal received before the power failure corresponds to a shutdown signal, the working state of the disconnection module 30 is maintained to be a disconnected state. In the opposite case, if the disconnection is due to the current overload protection operation, the working state of the disconnection module 30 is maintained to be a disconnected state, thereby ensuring the safety of the load 2.

Further to the above, compared with using a disconnection threshold distribution line composed of hundreds of time points to obtain multiple disconnection threshold values, or using mathematical formulae for time variables to calculate the disconnection threshold value, in an embodiment of the invention, the distribution line ZL1 of disconnection threshold values composed of a plurality of time intervals with second as an order of magnitude can effectively reduce the comparison points, simplify the current threshold data of the current, and achieve the same or better results in a comparatively simple manner.

Moreover, in this embodiment, the cumulative time values of the intervals in the distribution line ZL1 of disconnection threshold values and the corresponding disconnection threshold values have been calculated and stored in the current threshold data as numeric values in advance. Thereby, the disconnection threshold value may be simply obtained by selectively utilizing a "look-up table" during subsequent applications. The calculation of the disconnection threshold value may be omitted, and the time required for data processing may be saved.

In addition, compared with the conventional system that requires comparing multiple curved distribution lines of disconnection thresholds at the same time, the system in an embodiment of the invention first takes a single fixed value for basic filtering and reduces unnecessary comparisons. In the meantime, comparing the same with a single distribution line of disconnection threshold values can further simplify the comparison process and reduce the requirements for computing capability.

Finally emphasized is that the constituent elements disclosed in the above embodiments of the invention only serve for exemplary description, and are not intended to limit the scope of the invention. Replacement or variation with other equivalent elements should also covered by the claims of the invention.

## Claims

1. A current overload protection apparatus, comprising:
a current measuring device, used to perform a current measuring step to detect a current value on a current path and output a corresponding current signal;
a control module, electrically connected with the current measuring device, the control module storing current threshold data, wherein the current threshold data comprises a plurality of time intervals, the plurality of the time intervals respectively correspond to disconnection threshold values, as times corresponding to the plurality of time intervals precede, the corresponding disconnection threshold values increase, and the control module is used to perform a current detection step, an overload detection step, and an overload protection step, wherein
the current detection step is used to collect the current signal within a specified time length to obtain the current value;
the overload detection step is used to find the corresponding time interval from the current threshold data according to a time parameter of time counting, obtain the disconnection threshold value of the time interval, and determine by comparing the current value with the disconnection threshold value corresponding to the time interval corresponding to the time parameter; and
the overload protection step is used to perform a current overload protection operation on a load when the current value is determined to be greater than or equal to the disconnection threshold value corresponding to the time interval corresponding to the time parameter.

2. The current overload protection apparatus according to claim 1, wherein the current overload protection operation is switching the current path from a connected state to a disconnected state.

3. The current overload protection apparatus according to claim 1, wherein the current measuring device is a Hall-effect current sensor.

4. The current overload protection apparatus according to claim 1, wherein in the overload detection step, when the current value is determined to be less than the disconnection threshold value corresponding to the time interval of the time parameter, the time parameter is continued to be accumulated, and the current measuring step, the current detection step, and the overload detection step are sequentially performed again.

5. The current overload protection apparatus according to claim 4, when entering the overload detection step, whether the current value is greater than or equal to a preset threshold value is first determined, if the current value is greater than or equal to the preset threshold value, the overload detection step is proceeded, and if the current value is not greater than or equal to the preset threshold value, the time parameter is reset and the current measuring step, the current detection step, and the overload detection step are sequentially performed again.

6. The current overload protection apparatus according to claim 5, wherein the preset threshold value is the same as the disconnection threshold value corresponding to the last time interval in the current threshold data.

7. The current overload protection apparatus according to claim 5, further comprising a time counting unit used to start accumulating the time parameter after the current value of the current path reaches the preset threshold value.

8. The current overload protection apparatus according to claim 1, wherein the disconnection threshold value corresponding to the first time interval in the current threshold data is infinity.

9. The current overload protection apparatus according to claim 1, further comprising a correcting unit used to perform compensation correction on the disconnection threshold value stored in the current threshold data according to correction data to obtain a corrected disconnection threshold value.

10. The current overload protection apparatus according to claim 9, further comprising a temperature measuring unit used to measure a temperature of the current measuring device or an ambient temperature and generate the correction data.

11. The current overload protection apparatus according to claim 1, wherein the specified time length is greater than or equal to (1/F) seconds, where F is a frequency of an alternating current of the current path.

12. The current overload protection apparatus according to claim 1, where the control module is further used to perform a disconnection restoration step, used to store an actuation control signal sent to the load, wherein if the current path is disconnected because the current value is greater than or equal to the disconnection threshold value, the stored actuation control signal is caused to correspond to a disconnected state, and a working state of a disconnection module connected to the current path is caused to correspond to the stored actuation control signal.
